# EUROPÄISCHE PATENTANMELDUNG

(11) **EP 1 257 029 A1**
(43) Veröffentlichungstag der Anmeldung: **13.11.2002**
(21) Anmeldenummer: 01110950.1
(22) Anmeldetag: 07.05.2001
(51) Int. Cl.: H02G 3/04

(54) **Schwenkbare Funktionsleiste**

(71) Anmelder: Derungs Licht AG, 9202 Gossau (CH)
(72) Erfinder: Riedmann, Theo, 9016 St. Gallen (CH); Furrer, Samuel, 9212 Arnegg (CH)
(74) Vertreter: Hepp, Dieter

(57) **Zusammenfassung**

Die Erfindung betrifft eine Funktionsleiste (1) mit zwei Gehäuseteilen (10, 20, 20a) zur Aufnahme von mindestens zwei unterschiedlichen Funktionseinheiten (11, 12, 13, 14, 15, 21). Die Funktionsleiste (1) weist ein Befestigungsteil (30) zur Befestigung an einer Wand (4) auf und sie ist mit mindestens einem Anschluss eines elektrischen Stromversorgungs- bzw. Kommunikationssystems kontaktiert. Ein Gehäuseteil (10) der Funktionsleiste ist um eine Achse (ZZ) verschwenkbar.

## Beschreibung

Die Erfindung betrifft eine Funktionsleiste und die Verwendung dieser Funktionsleiste gemäss Oberbegriff der unabhängigen Patentansprüche.

Eine Funktionsleiste ist beispielsweise eine elektrische Stromleiste und/oder eine Anordnung mit einem oder mehreren Schaltern, Beleuchtungselementen, Anzeigeelementen, Lautsprechern oder Gasversorgungsausschlüssen etc. Beispielsweise erlaubt eine Stromleiste die Herstellung einer elektrischen Stromverbindung mittels Steckdose und Stecker. Ein Schalter erlaubt die Betätigung eines elektrischen Verbrauchers etc. Eine Funktionsleiste kann dementsprechend verschiedenen Funktionen dienen: z.B. kann in eine Stecker-Leiste ein Leselicht integriert sein. Werden z.B. in eine Mehrfach-Steckerleiste mehrere Stecker von elektrischen Verbrauchern eingesteckt, führt dies zu einer Belegung der gesamten Front mit Kabeln, was die Betätigung von Bedienungselementen oder das Ablesen von Anzeigeelementen erschweren kann und auch unschön anzusehen ist. Auch die Montage grossflächiger Funktionsleisten bereitet oft Schwierigkeiten.

Aufgabe der Erfindung ist es, die Nachteile des Bekannten zu beheben. Die Funktionsleiste soll vor allem mit bestehenden Standards und Normen der Elektrizitäts-, Elektronik- und Kommunikationstechnik und Gasversorgungstechnik, z.B. in Krankenhäusern, Labors und dergleichen kompatibel sein und raumsparende Anordnung von verschiedenen Elementen (auch Steckverbindungen, Anzeigen, Schalter, Beleuchtungskörper etc.) ermöglichen.

Diese Aufgaben werden durch die Erfindung gemäss den Patentansprüchen gelöst.

Insbesondere schlägt die Erfindung vor, die Funktionsleiste in zwei Gehäuseteile zu unterteilen. Eines der Gehäuseteile ist fest mit einer Wand oder einem Möbel- oder Verkleidungsteil oder dergleichen verbindbar. Es kann sich dabei auch um Abdeckplatten von Kabelkanälen, Teilen von Mobiliar oder aber auch ein Befestigungsteil an einem Bett handeln. Wesentlich ist, dass das Trag-Element ausreichend stabil ist um die Funktionsleiste in einer definierten Lage zu halten. Am zweckmässigsten ist in den meisten Fällen die Montage direkt an einer Wand.

Das erste Gehäuseteil dient im Wesentlichen der Befestigung. Es kann deshalb z.B. um eine Lager-Platte oder eine andere Lager-Anordnung für ein Dreh-Lager handeln, das z.B. an einer Wand befestigt wird oder Teil eines Kabelkanals oder eines Möbels ist. Das erste Gehäuseteil kann aber auch selbst als Funktionseinheit ausgebildet werden. Z.B. ergibt sich eine hervorragende Lösung, wenn das erste Gehäuseteil selbst als Beleuchtungselement ausgebildet ist, an dem das zweite Gehäuseteil drehbar befestigt ist.

Als Funktionseinheiten lassen sich an den Gehäuseteilen Lautsprecher, Steckdosen, Schalter, Anzeigeelemente, Telefonanschlüsse, Gasversorgungsanschlüsse und dergleichen vorsehen. Besonders vorteilhaft ist es, wenn z.B. auf einer Seite des Gehäuseteils eine Steckerleiste für Steckanschlüsse angebracht ist. Nach dem Herstellen der Steckverbindung kann das Gehäuseteil gedreht werden, wodurch die auf einer anderen Seite vorgesehenen Funktionseinheiten (z.B. Schalter oder Anzeigeelemente) ohne Behinderung durch Kabel sichtbar und bedienbar werden.

Selbstverständlich kann die Form des Gehäuseteils an spezielle Anforderungen angepasst werden. So ist es möglich, z.B. ein Gehäuseteil mit rechteckigem, dreieckigem oder mehreckigem Querschnitt herzustellen. Auch lassen sich Formen mit einer Flachseite und halbkreisförmigen oder gekrümmten weiteren Seiten verwirklichen. In erster Linie ist es wesentlich, dass die Leiste verdrehbar ist, um die Funktionselemente wenigstens einer Seite in eine andere Position zu verdrehen. Sofern z.B. ein rechteckiger Querschnitt vorgesehen ist, könnten alle vier Seiten des Gehäuseteils mit Funktionselementen bestückt werden.

Es kann auch z.B. das erste Gehäuseteil mit einer Notbeleuchtung oder Nachtlampe versehen werden, während das zweite Gehäuseteil auf der Vorderseite eine Raum- oder Lesebeleuchtung trägt und auf der Rückseite mit Funktionseinheiten, wie z.B. Steckdosen bestückt ist. Durch Drehen des Gehäuseteils lässt sich erreichen, dass einerseits die Steckdosen und Kabel in eine Lage zwischen Trag-Elemente und Wand verschwenkt werden und andererseits Beleuchtungseinheit und/oder Schalter in die gewünschte Bedienungs- und Betriebslage gebracht werden.

Die beiden Gehäuseteile sind durch einem dem Fachmann geläufiges Drehlager, z.B. eine wenigstens auf einer Seite drehbar gelagerte Achse mit einem Gegenlager, verbunden. Zweckmässig ist es, wenn das Gehäuseteil wenigstens über 90° oder sogar 180° verdrehbar ist, um gute Bedienbarkeit zu ermöglichen. Zweckmässig ist es dabei, wenn die Funktionsleiste in verschiedenen Stellungen einrastbar ist oder fixierbar ist. Die Funktionsleiste lässt sich besonders gut am Tragelement, z.B. einer Wand befestigen, wenn ein Befestigungsteil vorgesehen ist. Das Befestigungsteil kann einerseits z.B. an die Wand geschraubt oder gedübelt werden um dann mit einer vorbereiteten Rast-Verbindung oder Schraubverbindung mit einem der Gehäuseteile verbunden zu werden. Besonders stabil lässt sich das drehbare zweite Gehäuseteil mittels stationären Gehäuseteilen am Untergrund, z.B. einer Wand befestigen. Das zweite, drehbare Gehäuseteil ist dabei zweckmässigerweise drehbar zwischen einem ersten und einem dritten stationären Gehäuseteil angeordnet.

Die Erfindung eignet sich besonders gut zum Einsatz in Labors, Alten- und Pflegeheimen und Krankenhäusern oder in Hotels. Dort kann eine solche Funktionsleiste z.B. neben dem Bett angeordnet werden. Kabel werden auf der Rückseite zwischen Funktionsleiste und Wand oder Bett-Umrandung herausgeführt und von der Funktionsleiste verdeckt. Auf der Vorderseite sind Anzeige- und Bedienungselemente, z.B. Lichtschalter oder Telefonanschlüsse oder Lautstärkeregler für Radio angebracht. Die Funktionsleiste lässt sich dabei auch so drehen, dass sie sowohl durch einen z.B. im Bett liegenden Benutzer als auch aus anderem Winkel bedienbar ist.

Beispielhafte Ausführungsformen der Erfindung werden anhand der Figuren 1 bis 6 im Detail erläutert. Hierbei zeigt:
- Fig. 1: eine Draufsicht eines Ausschnitts einer ersten Ausführungsform einer Funktionsleiste,
- Fig. 2: eine Seitenansicht eines Ausschnitts der ersten Ausführungsform einer Funktionsleiste gemäss Fig. 1,
- Fig. 3: eine Seitenansicht eines Ausschnitts einer zweiten Ausführungsform einer Funktionsleiste,
- Fig. 4: eine schematische Sicht der Verschwenkung der Funktionsleiste,
- Fig. 5: ein abgewandeltes Ausführungsbeispiel mit drei Gehäuseteilen, und
- Fig. 6: ein weiteres abgewandeltes Ausführungsbeispiel mit einer Einbauvariante.

Die Funktionsleiste 1 weist zwei Gehäuseteile 10, 20 zur Aufnahme von mindestens zwei unterschiedlichen Funktionseinheiten 11, 12, 13, 14, 15, 21 auf. Ferner weist die Funktionsleiste 1 ein Befestigungsteil 30 zur Befestigung an einer Wand 4 auf. Das Gehäuseteil 20 kann aber auch direkt an der Wand 4 befestigt werden. Als "Wand" im Sinne dieser Erfindung sind auch Panele, Möbelteile, Abdeckungen etc. zu verstehen, die einerseits ausreichend stabil sind, um die Funktionsleiste zu ragen und andererseits die Zufuhr von Versorgungsleitungen (z.B. Spannungsversorgung, Telefonanschlüsse etc.) erlauben. Die Gehäuseteile 10, 20 und das Befestigungsteil 30 bestehen zumindestens teilweise aus bewährten Materialien wie Kunststoff, Metall, Holz, Glas, usw..

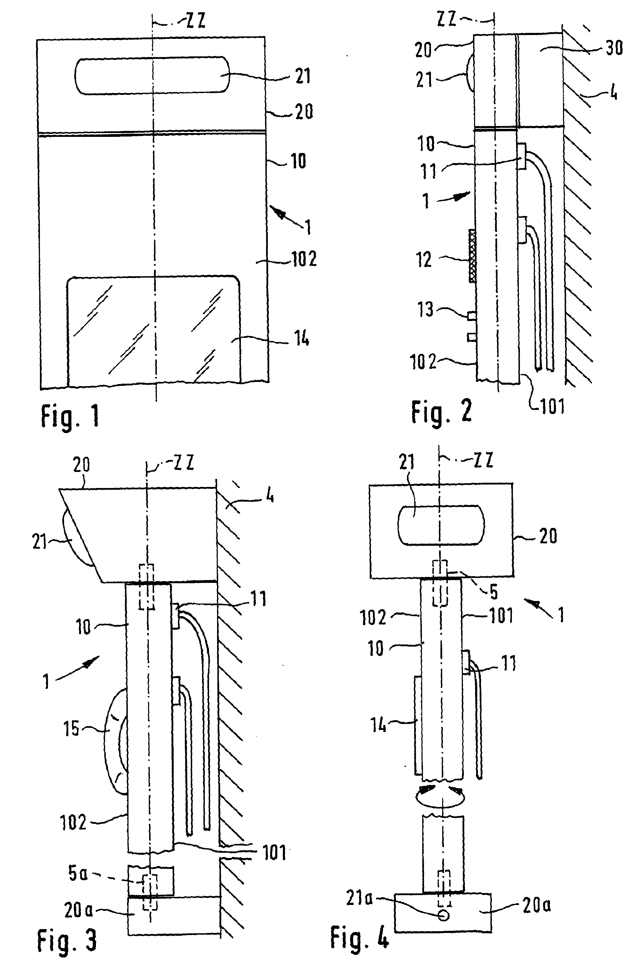

Die Funktionsleiste 1 ist über das Befestigungsteil 30 mit der Wand 4 befestigt (Fig. 2 und 3). Das Befestigungsteil 30 ist über bewährte Befestigungsmittel wie bspw. Dübel, Klemmen, usw. an der Wand 4 befestigt. Die Funktionsleiste 1 ist über bewährte Kontaktierungsmittel wie bspw. Lüsterklemmen, Steckverbindungen, usw. mit mindestens einem Anschluss eines elektrischen Stromversorgungs- bzw. Kommunikationssystems oder Gasversorgungssystems in der Wand 4 kontaktiert. Der Anschluss ist ein Stromversorgungskabel und/oder ein Computerkabel und/oder ein Videokabel und/oder ein Fernsehkabel und/oder ein Telefonkabel. Bspw. ist der Anschluss fest in der Wand 4 montiert. Dem Fachmann steht es bei Kenntnis der Erfindung frei, andere Anschlussarten vorzusehen. Zum Beispiel ist ein Anschluss durch die Wand (Unterputz-Anschluss), freie Zuleitung von einem Bodenkanal, von einem Dekkenkanal oder von einem Wandkanal denkbar.

Die Funktionsleiste 1 weist ein erstes Gehäuseteile 20 und ein zweites Gehäuseteil 10 auf. Das erste Gehäuseteil 20 ist mit dem Befestigungsteil 30 befestigt. Bevorzugt ist das erste Gehäuseteil 20 über bewährte Befestigungsmittel wie bspw. Schrauben, Klemmen, usw. starr am Befestigungsteil 30 befestigt. Bevorzugt ist das zweite Gehäuseteil 10 am Gehäuseteil 20 befestigt.

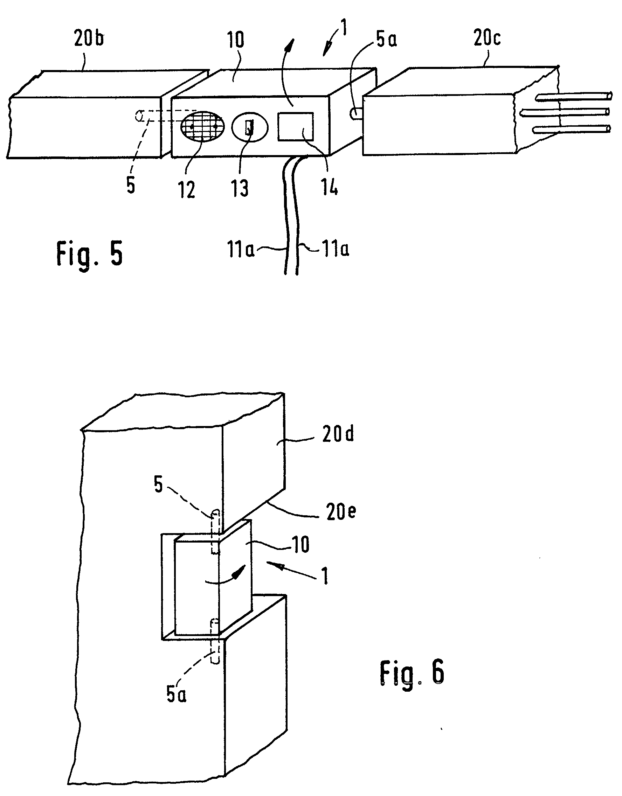

Bevorzugt ist das erste Gehäuseteil 10 über ein bewährtes Verschwenkungsmittel oder Lager 5 (5a) wie bspw. ein Scharnier, Drehlager, usw. schwenkbar am zweiten Gehäuseteil 20 (20a) befestigt. Bevorzugt ist die Achse ZZ (um die das zweite Gehäuseteil verschwenkbar ist) die Längsachse der Gehäuseteile 10, 20, 20a. Dieses Verschwenken wird in der schematischen Sicht gemäss Fig. 4 durch einen gekrümmten Doppelpfeil angezeigt.

Bevorzugt ist das Verschwenkungsmittel 5 für den Betrachter quasi nicht sichtbar im Inneren der Funktionsleiste 1 angeordnet. Die Funktionsleiste 1 kann auch ein bewährtes Sicherungsmittel wie bspw. eine lösbare Schnappverbindung, usw. aufweisen, um ein unbeabsichtigtes Verschwenken des zweiten Gehäuseteils 10 zu vermeiden.

In der Ausführungsform gemäss Fig. 3 ist das zweite Gehäuseteil 10 mit einem dritten Gehäuseteil 20a verbunden. Dieser Gehäuseteil 20a ist optional und unterstützt die Montage der Funktionsleiste 1 an einer Wand 4. Das Gehäuseteil 20a ist dazu mit einem Drehgelenk bzw. Lager 5 versehen, welches das zweite Gehäuseteil 10 trägt.

Eine erste Funktionseinheit ist eine elektrische Steckdose 11. Eine zweite Funktionseinheit ist ein Lautsprecher 12. Eine dritte Funktionseinheit ist ein Schalter 13. Eine vierte Funktionseinheit ist ein Bildschirm 14. Eine fünfte Funktionseinheit ist ein Telefonanschluss oder ein Telefon 15. Eine sechste Funktionseinheit ist eine Lampe 21. Als siebte Funktionseinheit dient hier ein Gasausschluss 21a. Dem Fachmann steht es bei Kenntnis der Erfindung frei, andere Funktionseinheiten in das Gehäuseteil einer Funktionsleiste aufzunehmen. Beim Ausführungsbeispiel ist das erste Gehäuseteil 20 quasi als Beleuchtungskörper ausgebildet.

Bevorzugt ist mindestens eine elektrische Steckdose 11 und/oder ein Lautsprecher 12 und/oder ein Schalter 13 und/oder ein Bildschirm 14 und/oder ein Telefon 15 im zweiten Gehäuseteil 10 angebracht und mindestens eine Lampe 21 im zweiten Gehäuseteil 20.

Bevorzugt ist mindestens eine elektrische Steckdose 11 auf einer ersten Seite, bevorzugt auf einer Rückseite 101 des ersten Gehäuseteiles 10 angeordnet, während Bedienungs- und Anzeigeelemente, wie mindestens ein Schalter 13 und/oder mindestens ein Lautsprecher 12 und/oder mindestens ein Bildschirm 14 und/oder mindestens ein Telefon 15 auf einer anderen Seite, bevorzugt auf einer Vorderseite 102 des ersten Gehäuseteiles 10 angeordnet ist. Auf diese Weise lässt sich ein unschön anzusehendes Kabel in einer elektrischen Steckdose 11 auf der Rückseite 101 des ersten Gehäuseteiles 10 montieren und durch Verschwenken der Gehäuseteile 10, 20 für den Betrachter durch die Funktionsleiste 1 quasi vollständig verdecken.

Dabei werden gleichzeitig die Anzeige- und Bedienungselemente wieder auf die der Bedienung zugängliche Seite (auf die Vorderseite) verlagert.

Gemäss Fig. 5 ist ein Gehäuseteil 10 einer Funktionsleiste 1 mittels zwei Lagern 3 und 5a analog Fig. 3 zwischen zwei Abschnitten 20b, 20c eines Kabelkanals drehbar montiert. Auf der Vorderseite des Gehäuses 10 sind Funktionseinheiten 12, 13 und 14 angeordnet. Auf der Rückseite sind Steckdosen 11 für die Aufnahme von Kabeln 11a angeordnet.

Fig. 6 zeigt die Teildarstellung eines Schrankelementes 20d mit einer nischenartigen Aussparung 20e. Mittels der gestrichelt angedeuteten Lager 5, 5a ist ein Gehäuseteil 10 einer Funktionsleiste 1 drehbar in der Aussparung 20e befestigt. Die Funktionsleiste trägt nicht dargestellte Funktionseinheiten analog Fig. 5.

## Patentansprüche

1. Funktionsleiste (1), zur Befestigung an einem Tragelement, insbesondere an einer Wand (4) und mit mindestens einem Anschluss zur Kontaktierung mit einem elektrischen Stromversorgungs- oder Kommunikationssystem, **dadurch gekennzeichnet, dass** die Funktionsleiste ein erstes Gehäuseteil (20) aufweist, das mit dem Trag-Element (4) verbindbar ist sowie wenigstens ein zweites Gehäusteil (10), das mindestens eine Funktionseinheit (11, 12, 13, 14, 15) enthält, und dass das zweite Gehäuseteil 10 am ersten Gehäuseteil (20) um eine Achse (ZZ) etwa parallel zum Tragelement (4) drehbar befestigt ist.

2. Funktionsleiste (1) gemäss Anspruch 1, **dadurch gekennzeichnet, dass** als Funktionseinheit mindestens eine elektrische Steckdose (11) und/oder ein Lautsprecher(12) und/oder ein Schalter (13) und/oder ein Bildschirm (14) und/oder ein Telefonanschluss (15) und/oder ein Gasversorgungsanschluss (21a) am zweiten Gehäuseteil (10) angeordnet ist.

3. Funktionsleiste (1) gemäss Anspruch 1 oder 2, **dadurch gekennzeichnet dass** das erste Gehäuseteil (20) ebenfalls eine Funktionseinheit (11, 12, 13, 14, 15) vorzugsweise eine Lampe (21) enthält.

4. Funktionsleiste (1) gemäss einem der Ansprüche 1 bis 3, **dadurch gekennzeichnet, dass** als Funktionseinheit mindestens eine elektrische Steckdose (11) auf einer ersten Seite, bevorzugt auf einer Rückseite (102) des Gehäuseteils (10) angeordnet ist, wobei die Rückseite (102) durch Verdrehen des Gehäuseteils (10) um die Achse (ZZ) zum Einstecken eines Steckers (11a) um wenigstens 90°, vorzugsweise um 180° drehbar gelagert ist, und wobei durch Zurückdrehen des zweiten Gehäuseteils (10) in die Ausgangsstellung, die Steckdose (11) und der Stecker (11a) in den von der Leiste (1) verdeckten Bereich zwischen Gehäuseteil (10) und Tragelement (4) verlagerbar ist.

5. Funktionsleiste nach einem der vorangegangenen Ansprüche **dadurch gekennzeichnet, dass** als Funktionseinheit mindestens ein Schalter (13) und/oder mindestens ein Lautsprecher (12) und/oder mindestens ein Bildschirm (14) und/oder mindestens ein Telefonanschluss (15)/Gasversorgungsanschluss (21a) an einer anderen Seite, bevorzugt an einer Vorderseite (101) des zweiten Gehäuseteils (20) und/oder des ersten Gehäuseteils (10) angeordnet ist.

6. Funktionsleiste (1) gemäss einem der vorangegangenen Ansprüche, **dadurch gekennzeichnet, dass** das erste Gehäuseteil (20) mit einem Befestigungsteil (30) am Tragelement (4) befestigbar ist.

7. Funktionsleiste (1) gemäss Anspruch 4, **dadurch gekennzeichnet, dass** das erste Gehäuseteil (10) über eine drehbare Lageranordnung (5) drehbar am zweiten Gehäuseteil (20) befestigt ist.

8. Funktionsleiste nach einem der vorangegangenen Ansprüche, **dadurch gekennzeichnet, dass** wenigstens eine Seite mit Steckdosen und eine andere Seite mit Anzeige und/oder Bedienungselementen (12, 13, 14, 15) versehen ist.

9. Verfahren zur Montage einer Funktionsleiste (1) gemäss Ansprüche 6 an einem Tragelement (4) insbesondere einer Wand, **dadurch gekennzeichnet, dass** das Befestigungsteil (30) am Tragelement (4) befestigt wird, dass dann das Befestigungsteil (30) mit dem ersten Gehäuseteil (20) verbunden wird, wobei die Funktionsleiste (1) mit mindestens einem Anschluss eines elektrischen Stromversorgungs- oder Kommunikationssystem im Tragelement (4) kontaktiert wird.

10. Funktionsleiste nach einem der vorangegangenen Ansprüche, **dadurch gekennzeichnet, dass** das zweite Gehäuseteil (20) mittels Lageranordnungen (5, 5a) beidseitig drehbar befestigt ist.

11. Funktionsleiste (1) nach einem der vorangegangenen Ansprüche, **dadurch gekennzeichnet, dass** das Gehäuseteil als drehbares Element in einen Kabelkanal (20b, 20c) integriert ist.

12. Funktionsleiste nach einem der vorangegangenen Ansprüche, **dadurch gekennzeichnet, dass** das zweite Gehäuseteil beidseitig drehbar in einem Möbel (20d) integriert ist.

13. Beleuchtungskörper, insbesondere Wandlampe mit einem Gehäuseteil (20), **dadurch gekennzeichnet, dass** am Gehäuseteil (20) eine Funktionsleiste (1) drehbar befestigt ist, an welcher Funktionsleiste (1) wenigstens eine Funktionseinheit (11, 12, 13, 14, 15) vorgesehen ist.

14. Beleuchtungskörper mit einer Funktionsleiste (1) gemäss einem der Ansprüche 1 bis 12.

15. Versorgungskanal mit einer Funktionsleiste (1) gemäss einem der Ansprüche 1 - 12.

16. Möbel mit einer Funktionsleiste (1) nach einem der Ansprüche 1 - 12.
